# FASCICULE DE BREVET EUROPEEN

(11) **EP 0 375 512 B1**
(45) Date de publication et mention de la délivrance du brevet: **02.11.1994**
(21) Numéro de dépôt: 89403468.5
(22) Date de dépôt: 13.12.1989
(51) Int. Cl.: F16D 25/14

(54) **Dispositif de commande électropneumatique d'embrayage**
Elektropneumatische Steuervorrichtung für eine Kupplung
Electropneumatic clutch control device

(30) Priorité: 20.12.1988 FR 8816793
(43) Date de publication de la demande: 27.06.1990
(73) Titulaire: RENAULT VEHICULES INDUSTRIELS, 69003 Lyon (FR)
(72) Inventeur: Ellenberger, Gérard, F-69440 Mornant (FR); Massard, Gilles, F-69300 Caluire (FR)
(74) Mandataire: Chassagnon, Jean Alain

(56) Documents cités:
- EP-A- 0 259 634
- DE-A- 3 545 500
- GB-A- 2 080 909
- GB-A- 2 165 914
- PATENT ABSTRACTS OF JAPAN vol. 10, no. 100 (M-470)(2157) 16 avril 1986, & JP-A-60234128

## Description

La présente invention se rapporte a un dispositif de commande électro-pneumatique d'embrayage de véhicules automobiles, notamment pour les véhicules industriels.

Le système le plus répandu, surtout sur les petits véhicules est la commande sans assistance, où l'embrayage est relié à la pédale par une tringle, un câble ou une liaison hydraulique avec émetteur et récepteur. Sur les poids-lourds, très fréquemment, la commande est assistée pneumatiquement, sur une liaison mécanique ou plus généralement hydraulique : c'est le servo-débrayage.

Ces différents systèmes présentent de nombreux inconvénients, notamment pour l'effort à la pédale, pour la progressivité et pour l'entretien.

L'effort à la pédale représente une proportion de l'effort de commande du mécanisme, mais il est augmenté lors de la manoeuvre de débrayage ou diminué lors de la manoeuvre d'embrayage de la somme de tous les frottements de chacun des constituants, ce qui donne un effort de débrayage important et une variation importante d'effort entre le débrayage et l'embrayage.

L' embrayage a trois modes d'utilisation : lors des changements de rapport, lors des démarrages et lorsqu'il n'est pas commandé.

Lors des changements de rapport, l'embrayage est manoeuvré en tout ou rien et il doit assurer avant tout une bonne désolidarisation entre le moteur et la boîte de vitesses afin de ne pas endommager les synchroniseurs. Aussi, le mécanisme est conçu pour que sa commande assure, par une course correcte, la "levée de plateau".

Lors des démarrages, l'embrayage en commandé "en extraction contrôlée de couple", c'est-à-dire que, pour assurer un démarrage progressif, le chauffeur dose le déplacement de la pédale afin de "faire patiner".

Dès lors on conçoit que plus la course de patinage est importante, plus l'embrayage sera jugé progressif. En dehors des phases de débrayage ou de changement de rapport, l'embrayage n'est pas commandé et son rôle principal est alors de transmettre le couple moteur vers la transmission (ou réciproquement), sans aucun patinage intempestif. Aussi l'embrayage présente-t-il, lorsqu'il n'est pas commandé, un couple nominal avant glissement, bien supérieur au couple moteur.

En résumé, la commande du mécanisme d'embrayage présente trois zones ayant chacune sa fonction :
. une course correspondant au "surtarage" de l'embrayage,
. une course "de patinage" qui est une course utile pour les démarrages,
. et une course "de levée de plateau" qui est nécessaire pour les changements de rapport.

Le problème des commandes actuelles est paradoxalement leur trop grande linéarité. Avec une commande linéaire, on reproduit à la pédale la même proportion de course de patinage par rapport à la course totale que celle du mécanisme. Or, avec les embrayages usuels, cette proportion est assez faible, ce qui donne une progressivité non idéale, à moins d'augmenter la course totale, au détriment du confort.

Enfin les systèmes connus, comme les systèmes à liaison hydraulique présentent l'inconvénient de nécessiter un entretien suivi et de poser de délicats problèmes de purge.

La publication EP 0 259 634 décrit à ce sujet un dispositif d'assistance hydraulique d'embrayage. Ce dispositif comporte notamment un capteur de position de la pédale d'embrayage, un boîtier électronique de contrôle et un modulateur électrohydraulique raccordé d'une part au boîtier électronique et d'autre part à un vérin hydraulique d'actionnement de la pédale.

Le but de la présente invention est de proposer un dispositif de commande électropneumatique d'embrayage exploitant de façon non linéaire le signal émis par un capteur de position de la pédale d'embrayage, de façon à agir sur la progressivité de la commande.

L'invention concerne un dispositif de commande électropneumatique d'embrayage à disques comportant une pédale de commande au pied, dont la course est mesurée par un capteur émettant un signal mis en forme par un boîtier électronique qui contrôle un modulateur électropneumatique raccordé à un réservoir pneumatique et à un vérin pneumatique de commande de mécanisme d'embrayage par deux canaux d'alimentation respectifs en air comprimé, de façon telle que le déplacement du mécanisme d'embrayage suive une loi déterminée en fonction de la pression d'alimentation du vérin. Ce dispositif est caractérisé en ce que le modulateur électropneumatique présente un orifice, permettant la mise à l'atmosphère du canal d'alimentation du vérin, lorsque la pédale est au repos, alors qu'au cours de son déplacement, le modulateur délivre dans le vérin une pression proportionnelle au signal de consigne émis par le calculateur, dont la courbe représentant la loi d'évolution en fonction de la course de la pédale 4 comporte :
- une première phase, pendant le déplacement de la pédale 4 qui correspond au surtarage,
- une seconde phase de pente plus faible que la première phase, pendant le déplacement de la pédale qui correspond au patinage,
- une troisième phase, de pente plus forte que la première phase, pendant un déplacement extrêmement faible jusqu'à ce que la pression atteigne la pression d'alimentation du détendeur qui correspond à la levée de plateau d'embrayage,
- une quatrième phase de pente nulle pendant un déplacement faible

Le dispositif de commande électropneumatique d'embrayage selon l'invention présente ainsi l'avantage d'être plus doux car il a une faible hystérisis en effort. De plus, il est non linéaire ce qui améliore la progressivité et il ne demande pas d'entretien. Enfin, il peut s'adapter sans difficulté aux mécanismes d'embrayages qui n'ont pas à être modifiés.

D'autres caractéristiques et avantages de la présente invention ressortiront à la description qui suit le mode de réalisation donné à titre d'exemple en référence aux dessins annexés sur lesquels :

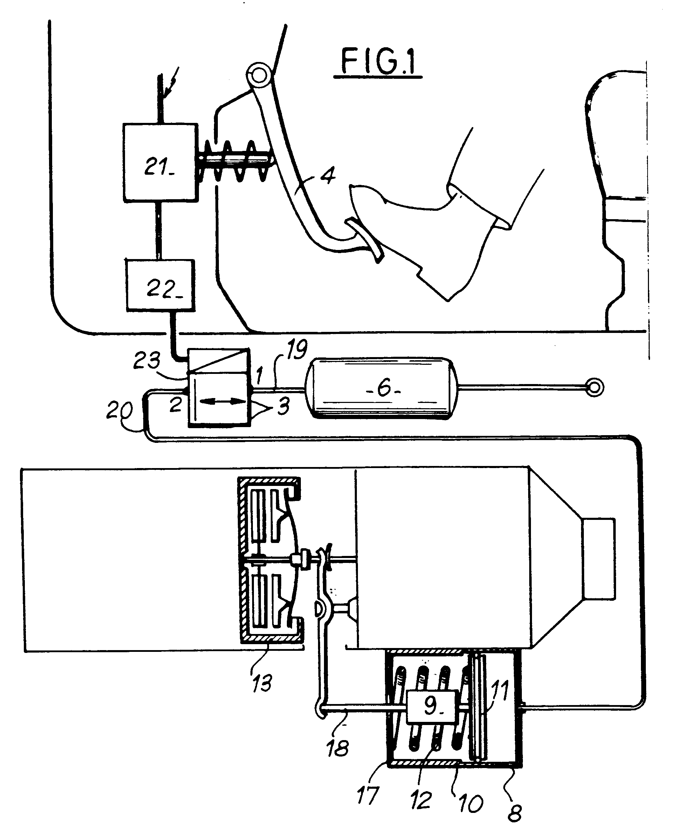

- la figure 1 est une vue d'ensemble du dispositif de commande pneumatique d'embrayage selon l'invention,
- la figure 2 est une courbe d'évolution de la pression en fonction du déplacement de la pédale d'embrayage.
- la figure 3 est une courbe de calibrage d'évolution du signal envoyé au modulateur électro-pneumatique en fonction du signal émis par le capteur.
- la figure 4 est une courbe d'hystéresis du signal envoyé au modulateur électro-pneumatique en fonction du signal émis par le capteur.

Le dipositif de commande electro-pneumatique d'embrayage a une commande au pied par l'intermédiaire d'une pédale 4, d'un capteur 21, d'un boîtier électronique 22, d'un modulateur 23 électro-pneumatique, un vérin 8 pneumatique, un mécanisme d'embrayage 13 et un circuit pneumatique. Le circuit pneumatique a un réservoir 6 qui est relié par le raccordement 7 à la source d'air comprimé.

Le capteur 21 de déplacement mesure la course de la pédale 4 d' embrayage, et il est disposé pour ladite pédale 4 avec laquelle il coopère au moyen d' un poussoir 16 et d'un système élastique 5 du type ressort de rappel. Le boitier électronique 22 met en forme le signal émis par le capteur 21, et il émet un signal au modulateur 23 électro-pneumatique. Le modulateur 23 électro-pneumatique délivre dans le verin 8 pneumatique une pression conformément au signal émis par le boîtier électronique 22.

L' actionneur pneumatique qui est le vérin 8 est disposé sur le carter d' embrayage, et il agit sur la butée d' embrayage 13 par l'intermédiaire d' une commande interne.

Le circuit pneumatique comprend un canal 19, un canal 20 et un orifice 3. Le canal 19 d'alimentation du modulateur 23 est relié au réservoir 6 et débouche dans l'orifice d'entrée 1. Le canal 20 d'alimentation du vérin 8 débouche dans l'orifice de sortie 2 le reliant ainsi au modulateur 23. Le modulateur 23 comporte l'orifice 3 de mise à l' atmosphère.

Pour la position embrayée c' est-à-dire lorsque la pédale 4 est au repos, le canal 20 d' alimentation du vérin 8 est mis en communication avec l' orifice 3 de mise à l'atmosphère par l'intermédiaire du modulateur 23.

Au cours du déplacement de la pédale 4 d'embrayage, le modulateur 23 est agencé de manière à établir la communication entre le canal 19 d'alimentation du modulateur 23 et le canal 20 d'alimentation du vérin 8 de façon à obtenir une évolution de la pression P d'alimentation du vérin 8 qui suive une loi déterminée en fonction de la course d de la pédale 4.

Cette pression P agit sur le vérin 8 qui est agencé de manière à obtenir un déplacement du mécanisme d'embrayage 13 qui suive une loi déterminée en fonction de ladite pression. Ainsi, selon l'invention, la commande se fait en effort en passant par une grandeur intermédiaire : la pression P.

La courbe représentant la loi d'évolution de la pression P d'alimentation du vérin 8 en fonction de la course d de la pédale 4 comporte :
. une première phase de forte pente jusqu'à P1 pendant un petit déplacement de d0 à d1 de la pédale 4 qui correspond au surtarage,
. une deuxième phase de faible pente de P1 à P2 pendant un grand déplacement de d1 à d2 de la pédale 4 qui correspond au patinage,
. une troisième phase de très forte pente de P2 à P3 pendant un déplacement extrêmement faible jusqu'à ce que la pression atteigne la pression maxi choisie pour le débrayage,
. une quatrième phase de pente nulle pendant un déplacement faible de d2 à d3.

Le capteur 21 de déplacement a une caractéristique linéaire et le boîtier électronique 22 émet un signal au modulateur 23 électro-pneumatique qui évolue dans quatre zones :
. une première zone de valeurs de fortes pentes correspondant à la première phase,
. une deuxième zone de valeurs de faibles pentes correspondant à la deuxième phase,
. une troisième zone de valeurs de très fortes pentes correspoondant à la troisième phase,
. une quatrième zone de valeur de la pente infinie correspondant à la quatrième phase.

La courbe représentant la loi d' évolution du déplacement du mécanisme d' embrayage 13 en fonction de la pression P est monotone croissante dans une première phase qui correspond au surtarage, au patinage et à la levée de plateau et elle est ensuite à pente nulle ce qui correspond à la position en butée du piston du vérin pneumatique 8.

Le déplacement du mécanisme d'embrayage en fonction de la pression P, selon une loi déterminée décrite ci-dessus, est obtenue grâce au vérin pneumatique 8. Il comporte un piston 11 sur lequel agit l'air comprimé réglé par le modulateur 23. Un système élastique 12 est antagoniste à l'action de l'air comprimé et il est situé entre le piston 11 et le fond 17 du vérin. Le rôle du système élastique est de déterminer en fonction de l'effort résistant de l'embrayage la loi monotone croissante dont il a été question plus haut. Une butée 10 limite la course du piston 11 et une tige 18 qui est le système de liaison permet de déplacer le mécanisme d'embrayage 13. Un système 9 de rattrapage automatique de la course d' usure de l'embrayage fait la liaison entre la tige 18 et le piston 11. Cette liaison est rigide lorsque l'air comprimé agit sur le piston 11 et elle est coulissante lorsque le vérin 8 n'est plus alimenté en air comprimé, c'est-à-dire en position embrayée de l'embrayage 13 correspondant à la position de repos de la pédale 4.

Le modulateur 23 électro-pneumatique est proportionnel et lorsqu'il est alimenté en air comprimé, il délivre à sa sortie une pression proportionnelle du signal électrique de consigne. Préférentiellement, cette caractéristique sera linéaire.

Le boîtier électronique 22 sert à adapter la puissance du signal émis par le capteur 21 à celle nécessaire au modulateur 23. Il sert également à convertir le signal émis en un signal compatible avec celui commandant le modulateur. Il rend non linéaire le signal émis par le capteur 21 afin d'agir sur la progressivité de la commande.

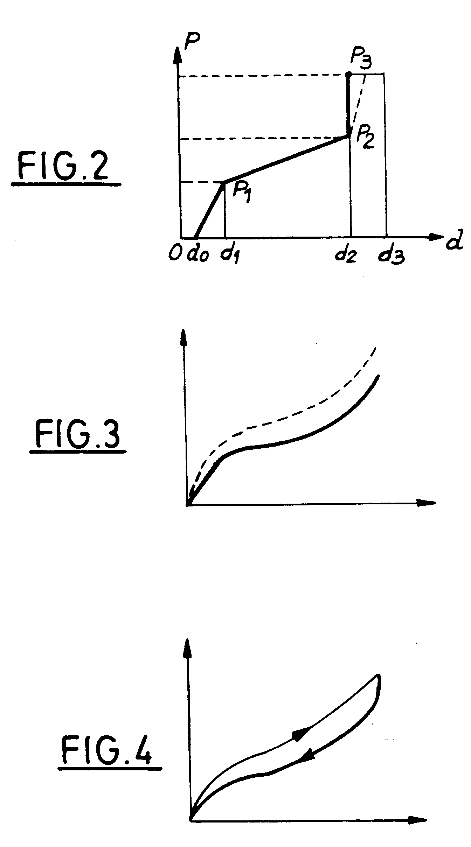

Le boîtier électronique 22 comporte un règlage du gain de manière à calibrer le signal, comme cela est représenté sur la figure 3, afin de pouvoir monter tous les composants standards sur des véhicules ayant des embrayages différents.

Le boîtier électronique 22 comporte une mémoire de manière à ce que le signal émis par ledit boîtier électronique 22 ait une caractéristique qui soit adaptée à la progressivité souhaitée sur l'embrayage.

Le boîtier électronique 22 a une mémoire qui a une caractéristique qui prend en compte l'hystérésis de l'ensemble du vérin 8 pneumatique et du mécanisme d'embrayage 13, comme cela est représenté sur la figure 4, afin de supprimer l'hystérésis du déplacement du mécanisme d' embrayage 13 par rapport à celui de la pédale 4.

## Revendications

1. Dispositif de commande électropneumatique d'embrayage à disques comportant une pédale (4) de commande au pied, dont la course est mesurée par un capteur (21) émettant un signal mis en forme par un boîtier électronique qui contrôle un modulateur électropneumatique (23) raccordé à un réservoir pneumatique (6) et à un vérin pneumatique (8) de commande de mécanisme d'embrayage (13) par deux canaux d'alimentation respectifs (19, 20) en air comprimé, de façon telle que le déplacement du mécanisme d'embrayage (13) suive une loi déterminée en fonction de la pression d'alimentation du vérin (8), caractérisé en ce que le modulateur électropneumatique (23) présente un orifice (3), permettant la mise à l'atmosphère du canal d'alimentation (20) du vérin (8), lorsque la pédale (4) est au repos, alors qu'au cours de son déplacement, le modulateur (23) délivre dans le vérin (8) une pression proportionnelle au signal de consigne émis par le calculateur (22), dont la courbe représentant la loi d'évolution en fonction de la course de la pédale (4) comporte :
- une première phase, pendant le déplacement de la pédale (4) qui correspond au surtarage,
- une seconde phase de pente plus faible que la première phase, pendant le déplacement de la pédale qui correspond au patinage,
- une troisième phase, de pente plus forte que la première phase, pendant un déplacement extrêmement faible jusqu'à ce que la pression atteigne la pression d'alimentation du détendeur qui correspond à la levée de plateau d'embrayage,
- une quatrième phase de pente nulle pendant un déplacement faible

2. Dispositif de commande selon la revendication 1, caractérisé en ce que le capteur (21) de déplacement a une caractéristique linéaire et que le boîtier électronique (22) émette un signal au modulateur (23) électropneumatique qui évolue dans quatre zones :
- une première zone de valeurs de fortes pentes correspondant à la première phase,
- une deuxième zone de valeurs de faibles pentes correspondant à la deuxième phase,
- une troisième zone de valeurs de très fortes pentes correspondant à la troisième phase,
- une quatrième zone de valeurs de pente infinie correspondant à la quatrième phase.

3. Dispositif de commande selon la revendication 1, caractérisé en ce que la courbe représentant la loi d'évolution du déplacement du mécanisme d'embrayage (13) en fonction de la pression est monotone croissante dans une première phase qui correspond au surtarage, au patinage et à la levée de plateau et est ensuite à pente nulle ce qui correspond à la position en butée du piston du vérin (8) pneumatique.

4. Dispositif de commande selon la revendication 1, caractérisé en ce que le modulateur (23) électropneumatique a une caractéristique linéaire.

5. Dispositif de commande selon la revendication 1, caractérisé en ce que le boîtier électronique (22) comporte un réglage du gain de manière à calibrer le signal afin de pouvoir monter tous les composants standards sur des véhicules ayant des embrayages différents.

6. Dispositif de commande selon la revendication 1, caractérisé en ce que le boîtier électronique (22) comporte une mémoire de manière à ce que le signal émis par ledit boîtier électronique (22) ait une caractéristique qui soit adaptée à la progressivité souhaitée sur l'embrayage.

7. Dispositif de commande selon la revendication 1, caractérisé en ce que le boîtier électronique (22) comporte une mémoire de façon à ce qu'elle ait une caractéristique qui prenne en compte l'hystérisis de l'ensemble vérin (8) pneumatique et du mécanisme d' embrayage (13), de manière à supprimer l' hystérisis du déplacement du mécanisme d' embrayage (13) par rapport à celui de la pédale (4).

8. Dispositif de commande selon la revendication 1, caractérisé en ce que le vérin pneumatique (8) comporte un piston (11) sur lequel agit l'air comprimé réglé par le modulateur 23, un système élastique (12) antagoniste est situé entre le piston (11) et le fond (17) du vérin, une butée (10) limite la course du piston (11), une tige (18) (ou système de liaison) permettant de déplacer le mécanisme d' embrayage (13) ; un système (9) de rattrapage automatique de la course d'usure de l'embrayage, faisant la liaison entre la tige (18) et le piston (11), cette liaison étant rigide lorsque l'air comprimé agit sur le piston (11) et libre (coulissante) lorsque le vérin (8) n'est plus alimenté en air comprimé, c'est-à-dire en position embrayée du mécanisme d'embrayage (13) correspondant à la position de repos de la pédale (4).

## Claims

1. An electropneumatic disk clutch control device comprising a foot control pedal (4), whose stroke is measured by a sensor (21) transmitting a signal shaped by an electronic housing which controls an electropneumatic modulator (23) connected to a pneumatic tank (6) and to a pneumatic jack (8) controlling the clutch mechanism (13) via two respective compressed air supply ducts (19, 20) so that the displacement of the clutch mechanism (13) follows a predetermined law as a function of the supply pressure of the jack (8), characterised in that the electropneumatic modulator (23) comprises an orifice (3) allowing the supply duct (20) of the jack (8) to be connected to atmosphere when the pedal (4) is at rest, whereas during its displacement, the modulator (23) supplies the jack (8) with a pressure proportional to the reference signal supplied by the computer (22) whose curve representing the law of evolution as a function of the stroke of the pedal (4) comprises:
- a first phase during the displacement of the pedal (4) which corresponds to over-calibration,
- a second phase of lower gradient than the first phase during the displacement of the pedal which corresponds to slipping,
- a third phase of much higher gradient than the first phase during an extremely small displacement until the pressure reaches the supply pressure of the reducing valve which corresponds to the lifting of the clutch plate,
- a fourth phase of zero gradient during a small displacement.

2. A control device as claimed in claim 1, characterised in that the displacement sensor (21) has a linear characteristic and in that the electronic housing (22) transmits a signal to the electropneumatic modulator (23) which evolves in four zones:
- a first zone of high gradient values corresponding to the first phase,
- a second zone of low gradient values corresponding to the second phase,
- a third zone of very high gradient values corresponding to the third phase,
- a fourth zone of infinite gradient values corresponding to the fourth phase.

3. A control device as claimed in claim 1, characterised in that the curve representing the law of evolution of the displacement of the clutch mechanism (13) as a function of pressure is monotonic and increases in a first phase which corresponds to over-calibration, slipping and lifting of the plate and is then at a zero gradient which corresponds to the abutment position of the pneumatic jack (8).

4. A control device as claimed in claim 1, characterised in that the electropneumatic modulator (23) has a linear characteristic.

5. A control device as claimed in claim 1, characterised in that the electronic housing (22) comprises an adjustment of the gain so as to calibrate the signal in order to able to mount all the standard components on vehicles with different clutches.

6. A control device as claimed in claim 1, characterised in that the electronic housing (22) comprises a memory such that the signal transmitted by the electronic housing (22) has a characteristic which is adapted to the desired rate of progress on the clutch.

7. A control device as claimed in claim 1, characterised in that the electronic housing (22) comprises a memory such that it has a characteristic which takes account of the hysteresis of the assembly of the pneumatic jack (8) and the clutch mechanism (13) so as to suppress the hysteresis of the displacement of the clutch mechanism (13) with respect to that of the pedal (4).

8. A control device as claimed in claim 1, characterised in that the pneumatic jack (8) comprises a piston (11) which is acted upon by the compressed air regulated by the modulator (23), an antagonist elastic system (12) disposed between the piston (11) and the base (17) of the jack, an abutment (10) limiting the stroke of the piston (11), a rod (18) (or connection system) making it possible to displace the clutch mechanism (13); a system (9) for automatically offsetting the worn stroke of the clutch making the connection between the rod (18) and the piston (11), this connection being rigid when the compressed air is acting on the piston (11) and released (sliding) when the jack (8) is no longer being supplied with compressed air, i.e. in the engaged position of the clutch mechanism (13) corresponding to the rest position of the pedal (4).

## Patentansprüche

1. Elektropneumatische Steuervorrichtung für eine Scheibenkupplung, mit einem fußgesteuerten Pedal (4), dessen Weg von einem Fühler (21) gemessen wird, der ein Signal abgibt, das durch eine elektronische Schaltung geformt wird und einen elektropneumatischen Modulator (23) steuert, der mit einem pneumatischen Behälter (6) und einem pneumatischem Stellzylinder (8) zur Steuerung des Kupplungsmechanismus (13) über zwei entsprechende Versorgungsleitungen (19, 20) mit Druckluft verbunden ist, sodaß die Bewegung des Kupplungsmechanismus (13) einem Gesetz folgt, das festgelegt ist als Funktion des Versorgungsdrucks des Stellzylinders (8), dadurch gekennzeichnet, daß der elektropneumatische Modulator (23) eine Öffnung (3) aufweist zur Verbindung der Versorgungsleitung (20) des Stellzylinders (8) mit der Atmosphäre, wenn das Pedal (4) in der Ruhestellung ist, während zur Zeit seiner Bewegung der Modulator (23) dem Stellzylinder (8) einen Druck zuführt, der proportional ist dem vom Rechner (22) abgegebenen Einstellsignal, dessen Kurve, die das Entwicklungsgesetz als Funktion des Weges des Pedals (4) darstellt, aufweist:
- eine erste Phase während der Bewegung des Pedals (4), entsprechend einer Übertarierung,
- eine zweite Phase, deren Steigung geringer ist als diejenige der ersten Phase während einer Bewegung des Pedals, entsprechend einem Rutschvorgang,
- eine dritte Phase mit stärkerer Steigung als diejenige der ersten Phase während einer äußerst geringen Bewegung, bis der Druck den Versorgungsdrick eines Expansionsventils erreicht, entsprechend dem Abheben der Kupplungsplatte,
- eine vierte Phase mit der Steigung null während einer geringen Bewegung.

2. Steuervorrichtung nach Anspruch 1, dadurch gekennzeichnet, daß der Verschiebefühler (21) eine lineare Charakteristik aufweist und daß die elektronische Schaltung (22) dem elektropneumatischen Modulator (23) ein Signal zuführt, welches sich in vier Bereichen entwickelt:
- einen ersten Bereich mit Werten starker Steigungen, entsprechend der ersten Phase,
- einen zweiten Bereich mit Werten geringer Steigungen, entsprechend der zweiten Phase,
- einen dritten Bereich mit Werten sehr starker Steigungen, entsprechend der dritten Phase,
- einen vierten Bereich mit Werten unendlicher Stei gung, entsprechend der vierten Phase.

3. Steuervorrichtung nach Anspruch 1, dadurch gekennzeichnet, daß die das Entwicklungsgesetz der Verschiebung des Kupplungsmechanismus (13) als Funktion des Drucks darstellende Kurve monoton zunehmend in einer ersten Phase ist, entsprechend der Übertarierung, dem Rutschvorgang und dem Abheben der Platte und anschließend die Steigung null aufweist, entsprechend der Anschlagstellung des Kolbens des pneumatischen Stellzylinders (8).

4. Steuervorrichtung nach Anspruch 1, dadurch gekennzeichnet, daß der elektropneumatische Modulator (23) eine lineare Charakteristik aufweist.

5. Steuervorrichtung nach Anspruch 1, dadurch gekennzeichnet, daß die elektronische Schaltung (22) eine Steuerung der Verstärkung derart aufweist, daß das Signal geeicht wird um alle herkömmlichen Bauteile in Fahrzeuge mit unterschiedlichen Kupplungen einbauen zu können.

6. Steuervorrichtung nach Anspruch 1, dadurch gekennzeichnet, daß die elektronische Schaltung (22) einen Speicher aufweist, sodaß das von der elektronischen Schaltung (22) abgegebene Signal eine Charakterisitk aufweist, welche an die gewünschte Progressivität der Kupplung angepaßt ist.

7. Steuervorrichtung nach Anspruch 1, dadurch gekennzeichnet, daß die elektronische Schaltung (22) einen Speicher aufweist, sodaß sie eine Charakteristik aufweist, welche die Hysterese der Gesamtheit aus pneumatischem Stellzylinder (8) und Kupplungsmechanismus (13) derart berücksichtigt, daß die Verschiebehysterese des Kupplungsmechanismus (13) bezüglich derjenigen des Pedals (4) verschwindet.

8. Steuervorrichtung nach Anspruch 1, dadurch gekennzeichnet, daß der pneumatische Stellzylinder (8) einen Kolben (11) aufweist, auf welchen Druckluft einwirkt, die durch den Modulator (23) gesteuert wird, wobei ein elastisches, diesem entgegenwirkendes System (12) zwischen dem Kolben (11) und dem Boden (17) des Stellzylinders angeordnet ist und ein Anschlag (10) den Weg des Kolbens (11) begrenzt, wobei eine Stange (18) (oder ein Verbindungssystem) die Verschiebung des Kupplungsmechanismus (13) ermöglicht; ein automatisches Ausgleichssystem (9) für den Abnutzungsweg der Kupplung bildet die Verbindung zwischen der Stange (18) und dem Kolben (11), wobei diese Verbindung fest ist, wenn der Kolben (11) mit Druckluft beaufschlagt wird und frei (gleitend) ist, wenn der Stellzylinder (8) nicht mehr mit Druckluft beaufschlagt wird, d.h. wenn er in der eingekuppelten Stellung des Kupplungsmechanismus (13) ist, entsprechend der Ruhestellung des Pedals (4).
